# EUROPEAN PATENT SPECIFICATION

(11) **EP 4 123 189 B1**
(45) Date of publication and mention of the grant of the patent: **06.11.2024**
(21) Application number: 21789438.5
(22) Date of filing: 12.04.2021
(51) Int. Cl.: F16L 19/028, F16L 19/02, F16B 23/00, F16B 41/00

(54) **ANTI-DISASSEMBLY JOINT AND ANTI-DISASSEMBLY JOINT ASSEMBLY**
DEMONTAGESICHERE VERBINDUNG UND DEMONTAGESICHERE VERBINDUNGSANORDNUNG
JOINT ANTI-DÉMONTAGE ET ASSEMBLAGE DE JOINT ANTI-DÉMONTAGE

(30) Priority: 15.04.2020 CN 202020553775 U
(43) Date of publication of application: 25.01.2023
(73) Proprietor: Zhejiang Dunan Artificial Environment Co., Ltd., Shaoxing Zhejiang 311835 (CN)
(72) Inventor: CHEN, Diyong, Shaoxing, Zhejiang 311835 (CN); GAO, Wansheng, Shaoxing, Zhejiang 311835 (CN); LOU, Feng, Shaoxing, Zhejiang 311835 (CN); ZHOU, Feng, Shaoxing, Zhejiang 311835 (CN)
(74) Representative: Meyer-Dulheuer MD Legal Patentanwälte PartG mbB
(86) International application number: PCT/CN2021/086456
(87) International publication number: WO 2021/208830

(56) References cited:
- CN-A- 103 174 888
- CN-A- 104 976 209
- CN-A- 106 969 219
- CN-A- 107 830 275
- CN-A- 107 940 132
- CN-A- 108 953 356
- CN-A- 109 780 342
- CN-U- 205 908 909
- CN-U- 207 470 951
- CN-U- 207 647 947
- CN-U- 207 701 977
- CN-U- 209 551 629
- CN-U- 212 616 854
- DE-A1- 3 302 239
- KR-A- 20200 025 563

## Description

### CROSS-REFERENCE TO RELATED APPLICATIONS

This application claims priority from China Patent Application No. 202020553775.2, filed on April 15, 2020, and titled "ANTI-DISASSEMBLY JOINT AND ANTI-DISASSEMBLY JOINT ASSEMBLY", in the China National Intellectual Property Administration.

### TECHNICAL FIELD

The present invention relates to the field of a pipe joint, in particular, to an anti-disassembly joint and an anti-disassembly joint assembly.

### BACKGROUND

Anti-disassembly joints are arranged on an indoor unit of a split-type air conditioner, and configured to connect and communicate an evaporator with a connecting pipe. In a conventional split-type air conditioner, non-removable joints are required to use on the indoor unit, so as to ensure leakproofness of the indoor unit and prevent refrigerant leakage caused by wrong disassembly. Usually, the evaporator and the connecting pipe are connected by matching a single joint with a hexagonal nut, or welding the single joint to the connecting pipe, so that an anti-disassembly effect can be realized. However, the hexagonal nut is easy to loosen from the single joint, and a connection between the two has no anti-disassembly function. Moreover, when the anti-disassembly function is realized by welding the single joint to the connecting pipe, it is costly and complicated in operation.

CN 103174888 A discloses an un-detachable tube connector which comprises a tube connector body and a rotating component for rotation of a tool. First outer threads are arranged at a first end of the tube connector body. The rotating component and the tube connector body are two independent parts. A driving part and a driven part which are matched with each other are respectively arranged on the rotating component and the tube connector body. When tightening torque is applied on the rotating component, the driving part can be combined with the driven part, and the rotating component drives the tube connector body to synchronously rotate through interactive functions of the driving part and the driven part. When unscrewing torque is applied on the rotating component, the driving part and the driven part are separated.

CN 107830275 A discloses a kind of disassembly prevention joint and an air conditioner are provided. The disassembly prevention joint of the present invention includes: an adapter body, the adapter body includes a main pipe and a limiting tooth being arranged on outside main pipe; a collar nut, the collar nut coordinates with main pipe's screw thread, and a stopper slot coordinated with a limiting tooth is provided with collar nut, and the limiting tooth has a normal thrust face.

CN 205908909 U discloses an anti-detachable pipe connector assembly used in air-conditioner, including a hollow anti-detachable pipe connector, a hollow sleeve head and a jump ring, the anti-detachable pipe connector includes a boss at middle part and located at both sides of a refrigeration plant connecting portion and a sleeve column for allowing the sleeve head to enter; it is provided with an one-way clutch being made up of at least three dentation bosses between the boss and the sleeve head, the dentation boss includes a spiraling rail portion and a reverse stopper connected to a high-end of the rail portion; a side wall of the sleeve head is provided with a spanner fastening part; and an annular slot for placing this jump ring is provided on an outer wall of the sleeve column.

CN 106969219 A discloses a kind of pipeline connection component, including a mutual immovable fitting male and female, wherein the male and/or the female includes a clamping part and a fasten part, wherein, a lateral surface of the clamping part is multiple arc surfaces, each arc surface according to a middle part of clamping part forms a segment, adjacent segments forms the fasten part.

KR 20200025563 A discloses a pipe joint for connecting two pipes formed with a collar inclined at an angle at one end, the pipe joint comprising: a hollow body having male threads respectively formed at outer peripheries of both ends, and having an inclined surface at an outer edge of the male screw facing the pipe, and a packing groove formed at an outer surface thereof; a pair of tightening nuts which are screwed to the male screw of the body while being fitted in the pipe and closely contact the collar of the pipe to the inclined surface of the body; a packing inserted into a packing groove of the body to seal the gap between the collar of the pipe and the inclined surface of the body while being pressed according to the tightening of the tightening nut; a separation prevention ring inserted between the collar of the pipe and the tightening nut and preventing separation of the pipe; a pair of holders each protruding from the inner circumference of the male screw of the body and having a plurality of through holes formed at regular intervals at an edge thereof; and an identification protrusion inserted into the through hole of the holder is formed to correspond to the edge at regular intervals, and is pushed toward the holder according to the tightening of the tightening nut between the tightening nut and the holder to completely tighten the body and the tightening nut, the end of the identification projection is exposed to the other side through the through hole when in the locking state.

### SUMMARY

In view of the above, it is necessary to provide an anti-disassembly joint and an anti-disassembly joint assembly.

The present invention provides an anti-disassembly joint according to claim 1. A first through hole is disposed inside the anti-disassembly joint, a thread portion having an external thread is provided on an outer surface of the anti-disassembly joint, and the anti-disassembly joint is connected to a pipe connection nut via the thread portion. An end portion of the anti-disassembly joint extending out forms an anti-disassembly raised block, and the anti-disassembly raised block is provided with a stop surface and a sliding surface. The stop surface and the sliding surface are disposed at two sides of the anti-disassembly raised block away from each other, respectively, and the stop surface is configured to be matched with an external tool to implement an installation of the anti-disassembly joint. A full thread diameter of the thread portion is a maximum diameter of the anti-disassembly joint. The anti-disassembly joint further includes a free spinning surface. The free spinning surface is connected to adjacent two anti-disassembly raised blocks, and the free spinning surface is perpendicular to an axis of the first through hole. The sliding surface is an inclined surface, and the sliding surface is smoothly connected to the free spinning surface.

The anti-disassembly joint provided by the present invention has an anti-disassembly function. In practical applications, the pipe connection nut is sleeved on the anti-disassembly joint, and a joint wrench can be matched with the anti-disassembly raised block and contact with the stop surface. An operator can use a nut wrench to match with the pipe connection nut, and apply a tightening torque on the pipe connection nut with the nut wrench. At this time, an abutting force can be produced on the stop surface with the joint wrench, and then an abutting torque in a direction opposite to the above tightening torque can be produced on the anti-disassembly joint with the joint wrench. Under action of the tightening torque and the abutting torque, the pipe connection nut and the anti-disassembly joint are tightened via the thread portion having an external thread. Then a loosening torque in a direction opposite to the above tightening torque can be applied on the pipe connection nut with the nut wrench again. Since the pipe connection nut is connected to the anti-disassembly joint via the thread portion, the joint wrench can slide along the sliding surface and cannot abut against the sliding surface. Thus, an abutting torque along a direction opposite to that of the loosening torque cannot be generated on the anti-disassembly joint. Therefore, the joint wrench can be pushed away from the anti-disassembly joint finally. That is, the joint wrench can only apply the abutting torque on the anti-disassembly joint along a tightening direction via the stop surface, so that the anti-disassembly joint can be fixed to the pipe connection nut; and, the joint wrench cannot apply the abutting torque on the anti-disassembly joint along a loosening direction to loosen and separate the anti-disassembly joint from the pipe connection nut, so that the anti-disassembly joint and the pipe connection nut cannot be disassembled.

In order to make the installation of the anti-disassembly joint more convenient, in an embodiment of the present invention, an outer surface of the anti-disassembly raised block and the stress-bearing surface define a bearing edge, and the bearing edge is capable of allowing the external tool to clamp and apply a twisting force thereon.

In this way, since the bearing edge is capable of allowing the external tool to clamp and apply a twisting force thereon, the external tool can be a common wrench, such as an adjustable wrench or a flat wrench. When the anti-disassembly joint is screwed in a direction from the stress-bearing surface to the outer surface of the anti-disassembly raised block with the common wrench, the common wrench can clamp on a side of the bearing edge close to the stress-bearing surface. At this point, the common wrench can screw and tighten the anti-disassembly joint. When the anti-disassembly joint is screwed in a direction from the outer surface of the anti-disassembly raised block to the stress-bearing surface with the common wrench, a direction of the twisting force applied by the common wrench is parallel to a tangent plane of the outer surface of the anti-disassembly raised block at the bearing edge. Therefore, the common wrench cannot apply a force on the anti-disassembly raised block, that is, the common wrench cannot loosen the anti-disassembly joint, thus achieving an anti-disassembly effect.

In some embodiments of the present invention, the bearing edge is parallel to an axis of the anti-disassembly joint.

In this way, when the common wrench is clamped on the bearing edge, and screws the anti-disassembly joint along the direction from the stress-bearing surface to the outer surface of the anti-disassembly raised block, since the direction of the twisting force applied by the common wrench is perpendicular to the axis of the anti-disassembly joint, a distance between the direction of the twisting force applied by the common wrench on the bearing edge and the axis of the anti-disassembly joint is the largest. It can be known from a common sense of physics that at this time, a torque formed by the common wrench on the bearing edge relative to the axis of the anti-disassembly joint is the largest, so that a tightening effect is the best.

The full thread diameter of the thread portion is the maximum diameter of the anti-disassembly joint, in this way it is convenient for professional technicians to clamp the thread portion with the external tool, so as to disassemble the anti-disassembly joint and the pipe connection nut by force.

In order to ensure that the joint wrench can provide an abutting torque on the stop surface, in some embodiments, the stop surface is a plane surface, and perpendicular to a radial cross section of the first through hole.

In this way, the stop surface can be in close contact with a corresponding matching surface of the joint wrench, and a force of the joint wrench acting on the stop surface is perpendicular to an axis of the first through hole. In a process of connecting the anti-disassembly joint and the pipe connection nut with the nut wrench and the joint wrench, the joint wrench can provide the anti-disassembly joint with the abutting torque along a circumferential direction thereof without generating a component force along the axis of the anti-disassembly joint. Therefore, an external thread of the thread portion can be prevented from being suffered from a great axial stress, thereby ensuring reliability of a threaded connection between the anti-disassembly joint and the pipe connection nut.

In order to avoid damage of a single anti-disassembly raised block, or reduce the stress received by the anti-disassembly raised block, so as to avoid crush and failure of the anti-disassembly raised block. In some embodiments, the number of the anti-disassembly raised block is at least two, and the at least two anti-disassembly raised blocks are evenly disposed along a circumference of the anti-disassembly joint.

In this way, when an anti-disassembly raised block is damaged due to slippage or other reasons, the joint wrench can be matched with another anti-disassembly raised block without affecting the installation of the pipe connection nut and anti-disassembly joint.

Furthermore, in this way, the at least two anti-disassembly raised blocks include multiple stop surfaces, which can increase a contact area between the joint wrench and the stop surfaces. In a process of tightening the pipe connection nut with the nut wrench, the joint wrench can abut against the stop surface more firmly, thus reducing a risk of slippage between the joint wrench and the anti-disassembly joint. Furthermore, since the at least two anti-disassembly raised blocks include multiple stop surfaces, the abutting force received by each of the at least two anti-disassembly raised blocks can be reduced, and pressures on each of the stop surfaces and the stresses at a root of each of the anti-disassembly raised blocks near an end of the anti-disassembly joint can be reduced. When a large tightening torque is applied to the pipe connection nut and a large abutting torque is applied to the anti-disassembly j oint, a risk of breaking or being crushed of the anti-disassembly raised blocks can be reduced. In addition, the at least two anti-disassembly raised blocks are evenly disposed along an axis of the anti-disassembly joint, which is convenient for the joint wrench to be matched with the multiple stop surfaces.

In this way, a distance between the stop surface and the sliding surface along the circumference of the anti-disassembly joint is greater than a distance of a raised structure of the joint wrench matching with the anti-disassembly raised block along the circumference of the anti-disassembly j oint. In this way, it is more convenient for the joint wrench to be matched with the anti-disassembly raised block, thus preventing the raised structure of the joint wrench from being unable to quickly align a recessed structure between the adjacent two anti-disassembly raised blocks.

In this way, during a process of applying the loosening torque on the pipe connection nut, since the sliding surface is the inclined surface, when the sliding surface is in contact with the joint wrench, the pressure of the joint wrench applied on the sliding surface will generate a component force along the axis of the anti-disassembly joint. Therefore, the joint wrench will slide relative to the disassembly raised block, so that the joint wrench can rotate around the axis of the anti-disassembly joint and also move along the axis of the anti-disassembly joint. Finally, the joint wrench can be pushed away from the anti-disassembly joint via the sliding surface. Furthermore, in the circumferential direction of the anti-disassembly joint, the size of the anti-disassembly raised block gradually decreases from a root portion near the end of the anti-disassembly joint to an end portion away from the end of the anti-disassembly joint, that is, width of the anti-disassembly raised block gradually decreases from the root portion to the end portion. In this way, ability to withstand compressive stress of the root portion of the anti-disassembly raised block can be increased, and the root portion of the anti-disassembly raised block is less likely to be bent or twisted when the joint wrench applies the abutting force on the stop surface.

In order to reduce wear and squeeze of the end of the anti-disassembly raised block by the external tool, in some embodiments, the anti-disassembly raised block further includes a transitional surface. The transitional surface is disposed at an end portion of the anti-disassembly raised block, and the transitional surface is disposed between the stop surface and the sliding surface of the anti-disassembly raised block.

In this way, a transition between the stop surface and the sliding surface of the same anti-disassembly raised block can be eased by the transitional surface, so the end portion of the anti-disassembly raised block away from the anti-disassembly joint is smooth and will not form a sharp protrusion. When the joint wrench is matched with the anti-disassembly raised block, the transitional surface can reduce wear and squeeze of the end portion of the anti-disassembly raised block away from the end of the anti-disassembly joint by the external tool.

In some embodiments, the transitional surface is perpendicular to the axis of the first through hole.

In this way, the transitional surface is easy to be processed.

The present invention further provides an anti-disassembly joint assembly. The anti-disassembly joint assembly includes a pipe connection nut, a first pipe body, a second pipe body and the anti-disassembly joint mentioned above. The first pipe body is capable of extending into the first through hole, the pipe connection nut is provided with an internal thread, and the internal thread is capable of being matched with the thread portion of the anti-disassembly joint. The pipe connection nut is sleeved on the second pipe body, the second pipe body is fixed between the anti-disassembly joint and the pipe connection nut, and the second pipe body abuts against the anti-disassembly joint and the pipe connection nut.

The anti-disassembly joint assembly provided by the present invention has the anti-disassembly function, and the anti-disassembly joint can be non-removably fixed to the pipe connection nut. The operator can only tighten the pipe connection nut and the anti-disassembly joint with the nut wrench and the joint wrench, but cannot loosen the two. The first pipe body can be connected to and communicated with the second pipe body via the anti-disassembly joint of the anti-disassembly joint assembly, so that a communication between an inner cavity of the first pipe body, the first through hole and an inner cavity of the second pipe body can be realized. The second pipe body is sleeved on the anti-disassembly joint, and the pipe connection nut is sleeved on the second pipe body, thus limiting axial and radial movements of the second pipe body relative to the anti-disassembly joint.

In order to facilitate professional technicians clamping the anti-disassembly joint with the external tool, so as to disassemble the anti-disassembly joint and the pipe connection nut by force, in some embodiments, when the anti-disassembly joint is fixed to the pipe connection nut, at least a part of the thread portion is disposed outside the pipe connection nut.

In this way, when the pipe connection nut is fixed on the anti-disassembly joint, the part of the thread portion disposed outside the pipe connection nut can provide an area for the external tool to clamp. Therefore, the part of the thread portion disposed outside the pipe connection nut can be clamped by the professional technicians with the external tool, so as to disassemble the anti-disassembly joint and the pipe connection nut by force.

In order to facilitate a fixed connection between the pipe connection nut and the anti-disassembly joint, in some embodiments, an outer surface of the pipe connection nut is provided with a screwing portion, and a cross-section of the screwing portion is in polygon-shaped and configured to be matched with the external tool.

In this way, the external tool can be matched with the screwing portion of the pipe connection nut, and the joint wrench can be matched with the anti-disassembly raised block of the anti-disassembly joint at the same time by the operator, so as to apply the tightening torque to the pipe connection nut. At the same time, the joint wrench can abut against the stop surface, so that the pipe connection nut can be fixed to the anti-disassembly joint via the external thread of the thread portion.

In order to facilitate the second pipe body aligning and being sleeved on the anti-disassembly joint, in some embodiments, the end portion of the anti-disassembly joint away from the anti-disassembly raised block is further provided with an abutting surface, an end portion of the second pipe body close to the anti-disassembly joint is provided with an expanding portion, and the abutting surface abuts against the expanding portion.

In this way, the second pipe body can abut against the abutting surface via the expanding portion, and the expanding portion can be beneficial for the second pipe body to be smoothly sleeved on the anti-disassembly joint, and increase the contact area between the second pipe body and the abutting surface. The abutting surface can be beneficial for axial and radial positioning of the second pipe body relative to the anti-disassembly joint, and limit a depth of the second pipe body sleeved on the anti-disassembly joint.

### BRIEF DESCRIPTION OF THE DRAWINGS

FIG. 1 is a structural schematic view of an anti-disassembly joint in an embodiment of the present invention.
FIG. 2 is a half-sectional view of the anti-disassembly joint of FIG. 1.
FIG. 3 is a schematic view of the anti-disassembly joint of FIG. 1 from a second view angle.
FIG. 4 is a schematic view of the anti-disassembly joint of FIG. 1 from a third view angle.
FIG. 5 is a structural schematic view of an anti-disassembly joint assembly in an embodiment of the present invention.
FIG. 6 is a half-sectional view of the anti-disassembly joint assembly of FIG. 5.
FIG. 7 is a schematic view of the anti-disassembly joint assembly of FIG. 5 from a second view angle.

In the figures, 100 represents an anti-disassembly joint; 10 represents a first through hole; 20 represents a thread portion; 30 represents an anti-disassembly raised block; 31 represents a stop surface; 311 represents a bearing edge; 32 represents a sliding surface; 33 represents a transitional surface; 40 represents a free spinning surface; 50 represents an abutting surface; 200 represents an anti-disassembly joint assembly; 210 represents a pipe connection nut; 211 represents a screwing portion; 220 represents a first pipe body; 230 represents a second pipe body; and 231 represents an expanding portion.

### DETAILED DESCRIPTION

The technical solutions in the embodiments of the present invention are clearly and completely described in the following with reference to the accompanying drawings in the embodiments of the present invention. It is obvious that the described embodiments are only a part of the embodiments, but not all of the embodiments. All other embodiments obtained by those skilled in the art based on the embodiments of the present invention without departing from the inventive scope are the scope of the present invention.

It should be noted that when an element is referred to as being "arranged on" another element, it may be directly arranged on the other element or a further element may be presented between them. When an element is considered to be "disposed on" another element, it may be directly disposed on the other element or a further element may be presented between them. When an element is considered to be "fixed to" to another element, it may be directly fixed to the other element or fixed to the other element through a further element.

Unless otherwise defined, all technical and scientific terms used herein have the same meaning as a skilled person in the art would understand. The terminology used in the description of the present invention is for the purpose of describing particular embodiments and is not intended to limit the invention. The term "or/and" as used herein includes any and all combinations of one or more of the associated listed items.

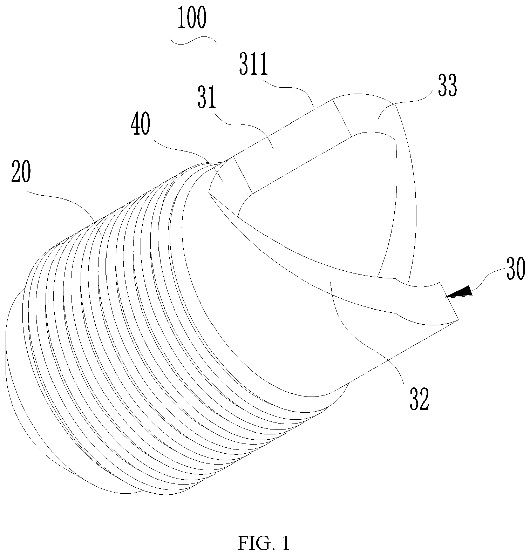

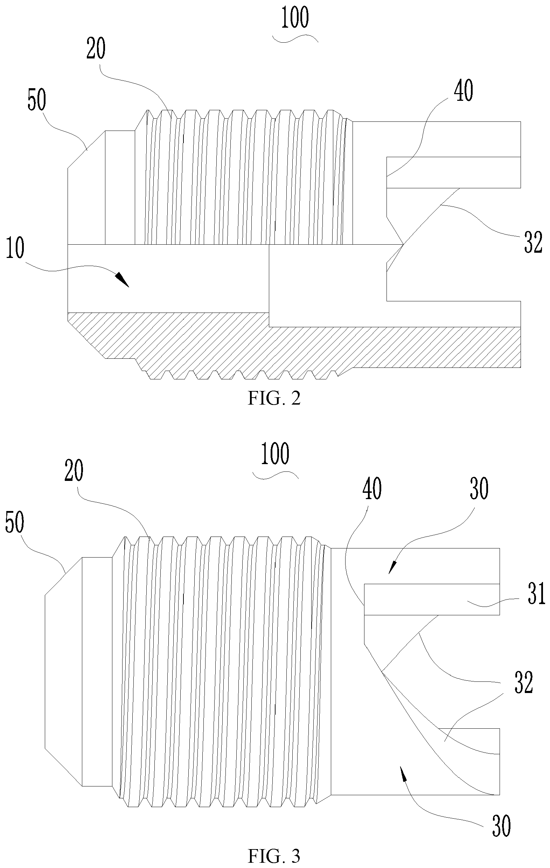

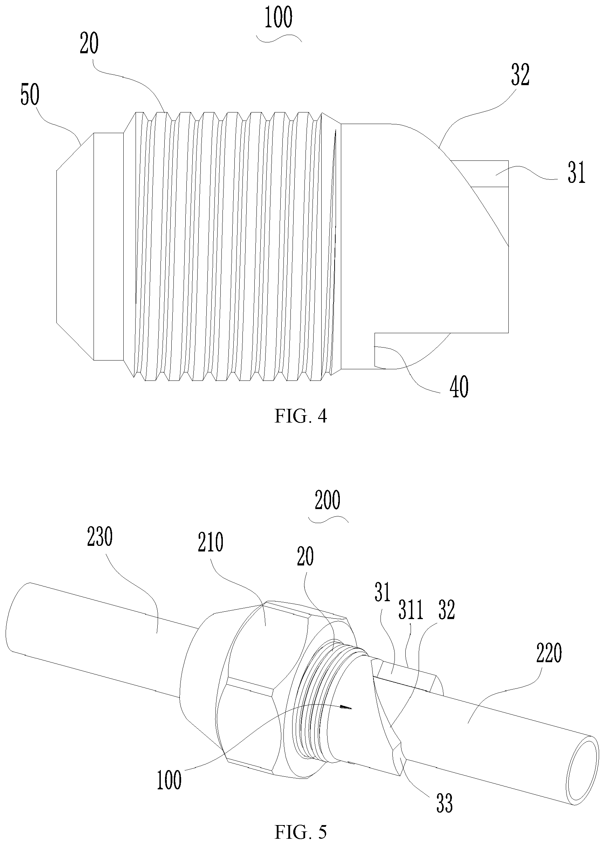

Referring to FIG. 1 to FIG. 4, FIG. 1 is a structural schematic view of an anti-disassembly joint 100 in an embodiment of the present invention; FIG. 2 is a half-sectional view of the anti-disassembly joint 100 of FIG. 1; FIG. 3 is a schematic view of the anti-disassembly joint 100 of FIG. 1 from a second view angle; and FIG. 4 is a schematic view of the anti-disassembly joint 100 of FIG. 1 from a third view angle.

The present invention provides an anti-disassembly joint 100, the anti-disassembly joints can be arranged on an indoor unit of a split-type air conditioner, and configured to connect and communicate an evaporator with a connecting pipe. It can be understood that, in other embodiments, the anti-disassembly joint 100 can also be configured for connection occasions of other types of anti-disassembly pipes.

The anti-disassembly joint 100 provided by the present invention is substantially in tube-shaped, and a first through hole 10 is disposed inside the anti-disassembly joint for a first pipe body to extend into. A thread portion 20 having an external thread is provided on an outer surface of the anti-disassembly joint 100, and the anti-disassembly joint 100 is connected to a pipe connection nut 210 via the thread portion 20. The pipe connection nut 210 can be a single nut sleeved on the anti-disassembly joint 100, or a pipe body including a nut head.

In a conventional split-type air conditioner, non-removable joints are required to use in the indoor unit, so as to ensure leakproofness of the indoor unit and prevent refrigerant leakage caused by wrong disassembly. Usually, the evaporator and the connecting pipe are connected by matching a single joint with a hexagonal nut, or welding the single joint to the connecting pipe, so that an anti-disassembly effect can be realized. However, the hexagonal nut is easy to be loosened from the single joint, and a connection between the two has no anti-disassembly function. Moreover, when the anti-disassembly function is realized by welding the single joint to the connecting pipe, it is costly and complicated in operation.

In view of the above technical problems, the anti-disassembly joint 100 provided by the present invention further includes an anti-disassembly raised block 30 formed by an end portion of the anti-disassembly joint extending out. The anti-disassembly raised block 30 is provided with a stop surface 31 and a sliding surface 32, the stop surface 31 and the sliding surface 32 are disposed at two sides of the anti-disassembly raised block 30 away from each other, respectively. An external tool includes a fitting structure matched with the stop surface 31, and the fitting structure can be matched with the anti-disassembly joint 100 to rotate thereof. In some embodiments, the external tool can be a joint wrench.

In this way, the anti-disassembly joint 100 provided by the present invention has an anti-disassembly function. In practical applications, the pipe connection nut 210 is sleeved on the anti-disassembly joint 100, and the joint wrench can be matched with the anti-disassembly raised block 30 and contact with the stop surface 31. An operator can use a nut wrench to match with the pipe connection nut 210, and apply a tightening torque on the pipe connection nut 210 with the nut wrench. At this time, an abutting force can be produced on the stop surface 31 with the joint wrench, and then an abutting torque in a direction opposite to the above tightening torque can be produced on the anti-disassembly joint 100 with the joint wrench. Under action of the tightening torque and the abutting torque, the pipe connection nut 210 and the anti-disassembly joint 100 are tightened via the thread portion 20 having an external thread. Then a loosening torque in a direction opposite to the above tightening torque can be applied on the pipe connection nut 210 with the nut wrench again. Since the pipe connection nut 210 is connected to the anti-disassembly joint 100 via the thread portion 20, the joint wrench can slide along the sliding surface 32 and cannot abut against the sliding surface 32. Thus, an abutting torque along a direction opposite to that of the loosening torque cannot be generated on the anti-disassembly joint 100. Therefore, the joint wrench can be pushed away from the anti-disassembly joint finally. That is, the joint wrench can only apply the abutting torque on the anti-disassembly joint along a tightening direction via the stop surface, so that the anti-disassembly joint 100 can be fixed to the pipe connection nut 210; and, the joint wrench cannot apply the abutting torque on the anti-disassembly joint along a loosening direction to loosen and separate the anti-disassembly joint from the pipe connection nut, so that the anti-disassembly joint 100 and the pipe connection nut 210 cannot be disassembled.

In some embodiments, an outer surface of the anti-disassembly raised block 30 and the stop surface 31 define a bearing edge 311, and the bearing edge 311 is capable of allowing the external tool to clamp and apply a twisting force thereon.

In practical applications, the anti-disassembly joint 100 can be threadedly connected to the pipe connection nut 210. The external tool can be the joint wrench or the nut wrench, and can also be a common wrench, such as an adjustable wrench or a flat wrench. When the anti-disassembly joint 100 is screwed in a direction from the stop surface 31 to the outer surface of the anti-disassembly raised block 30 with the common wrench or the nut wrench, the common wrench or the nut wrench can clamp on a side of the bearing edge 311 close to the stop surface 31. At this point, the common wrench or the nut wrench can screw and tighten the anti-disassembly joint 100. When the anti-disassembly joint 100 is screwed in a direction from the outer surface of the anti-disassembly raised block 30 to the stop surface 31 with the common wrench or the nut wrench, a direction of the twisting force applied by the common wrench or the nut wrench is parallel to a tangent plane of the outer surface of the anti-disassembly raised block 30 at the bearing edge 311. Therefore, the common wrench or the nut wrench cannot apply a force on the anti-disassembly raised block 30, that is, the common wrench or the nut wrench cannot loosen the anti-disassembly joint 100, thus achieving an anti-disassembly effect.

In some embodiments of the present invention, the bearing edge 211 is parallel to an axis of the anti-disassembly joint 100.

In this way, when the common wrench clamps on the bearing edge 211, and screwed the anti-disassembly joint 100 along the direction from the stress-bearing 21 to the outer surface of the anti-disassembly raised block 20, since the direction of the twisting force applied by the common wrench is perpendicular to the axis of the anti-disassembly joint 100, a distance between the direction of the twisting force applied by the common wrench on the bearing edge 211 and the axis of the anti-disassembly joint 100 is the largest. It can be known from a common sense of physics that at this time, a torque formed by the common wrench on the bearing edge 211 relative to the axis of the anti-disassembly joint 100 is the largest, so that a tightening effect is the best.

A full thread diameter of the thread portion 20 is a maximum diameter of the anti-disassembly joint 100.

In this way, the full thread diameter of the thread portion 20 is the maximum diameter of the anti-disassembly joint 100, and it is convenient for professional technicians to clamp the thread portion 20 with the external tool, so as to disassemble the anti-disassembly joint 100 and the pipe connection nut 210 by force.

In embodiments not covered by the claims, the anti-disassembly joint 100 further includes a connecting portion connected to the thread portion 20, and an outer diameter of the connecting portion is greater than the full thread diameter of the thread portion 20.

In this way, the maximum diameter of the anti-disassembly joint 100 is the outer diameter of the connecting portion. Therefore, it is convenient for professional technicians to clamp the connecting portion with the external tool, so as to disassemble the anti-disassembly joint 100 and the pipe connection nut 210 by force, which is suitable for needs of different application occasions of the anti-disassembly joint 100.

In some embodiments, the stop surface 31 is a plane surface, and perpendicular to a radial cross section of the first through hole 10.

In this way, the stop surface 31 can be in close contact with a corresponding matching surface of the joint wrench, and a force of the joint wrench acting on the stop surface 31 is perpendicular to an axis of the first through hole 10. In a process of connecting the anti-disassembly joint 100 to the pipe connection nut 210 with the nut wrench and the joint wrench, the joint wrench can provide the anti-disassembly joint 100 with the abutting torque along a circumferential direction thereof without generating a component force along the axis of the anti-disassembly joint 100. Therefore, an external thread of the thread portion 20 can be prevented from being suffered from a great axis stress, thereby ensuring reliability of a threaded connection between the anti-disassembly joint 100 and the pipe connection nut 210.

It can be understood that the stop surface 31 can also be a curved surface, and perpendicular to a radial direction of the first through hole 10, so as to be matched with the joint wrench to rotate the anti-disassembly joint 100.

In some embodiments, the number of the anti-disassembly raised blocks 30 is at least two, and the at least two anti-disassembly raised blocks 30 are evenly disposed along a circumference of the anti-disassembly joint 100.

In this way, when an anti-disassembly raised block 30 is damaged due to slippage or other reasons, the joint wrench can be matched with another anti-disassembly raised block 30 without affecting the installation of the pipe connection nut 210 and anti-disassembly joint 100.

Furthermore, the at least two anti-disassembly raised blocks 30 can include multiple stop surfaces 31, which can increase a contact area between the joint wrench and the stop surfaces 31. In a process of tightening the pipe connection nut 210 with the nut wrench, the joint wrench can abut against the stop surface 31 more firmly, thus reducing a risk of slippage between the joint wrench and the anti-disassembly joint 100. Furthermore, since the at least two anti-disassembly raised blocks 30 include multiple stop surfaces, the abutting force received by each of the at least two anti-disassembly raised blocks 30 can be reduced, and pressures on each of the stop surfaces 31 and the stresses at a root of each of the anti-disassembly raised blocks 30 near an end of the anti-disassembly joint 100 can be reduced. When a large tightening torque is applied to the pipe connection nut 210 and a large abutting torque is applied to the anti-disassembly joint 100, a risk of breaking or being crushed of the anti-disassembly raised blocks 30 can be reduced. In addition, the at least two anti-disassembly raised blocks 30 are evenly disposed along a circumference of the anti-disassembly joint 100, which is convenient for the joint wrench to be matched with the multiple stop surfaces 31.

The anti-disassembly joint 100 further includes a free spinning surface 40. The free spinning surface 40 is connected to adjacent two anti-disassembly raised blocks 30, and the free spinning surface 40 is perpendicular to an axis of the first through hole 10.

In this way, a distance between the stop surface 31 and the sliding surface 32 along the circumference of the anti-disassembly joint 100 is greater than a distance of a raised structure of the joint wrench matching with the anti-disassembly raised block 30 along the circumference of the anti-disassembly joint. In this way, it is more convenient for the joint wrench to be matched with the anti-disassembly raised block 30, thus preventing the raised structure of the joint wrench from being unable to quickly align a recessed structure between the adjacent two anti-disassembly raised blocks 30.

The sliding surface 32 is an inclined surface, and the sliding surface 32 is smoothly connected to the free spinning surface 40.

In this way, during a process of applying the loosening torque on the pipe connection nut, since the sliding surface 31 is the inclined surface, when the sliding surface is in contact with the joint wrench, the pressure of the joint wrench applied on the sliding surface 32 will generate a component force along the axis of the anti-disassembly joint 100. Therefore, the joint wrench will slide relative to the disassembly raised block 30, so that the joint wrench can rotate around the axis of the anti-disassembly joint 100 and also move along the axis of the anti-disassembly joint 100. Finally, the joint wrench can be pushed away from the anti-disassembly joint 100 via the sliding surface. Furthermore, in the circumferential direction of the anti-disassembly joint 100, the size of the anti-disassembly raised block 30 gradually decreases from a root portion near the end of the anti-disassembly joint 100 to an end portion away from the end of the anti-disassembly joint, that is, width of the anti-disassembly raised block 30 gradually decreases from the root portion to the end portion. In this way, ability to withstand compressive stress of the root portion of the anti-disassembly raised block 30 can be increased, and the root portion of the anti-disassembly raised block 30 is less likely to be bent or twisted when the joint wrench applies the abutting force on the stop surface 31.

In some embodiments, the anti-disassembly raised block 30 further includes a transitional surface 33. The transitional surface 33 is disposed at the end portion of the anti-disassembly raised block 30, and the transitional surface 33 is disposed between the stop surface 31 and the sliding surface 32 of the anti-disassembly raised block 30.

In this way, a transition between the stop surface 31 and the sliding surface 32 of the same anti-disassembly raised block 30 can be eased by the transitional surface 33, so the end of the anti-disassembly raised block 30 away from the anti-disassembly joint 100 is smooth and will not form a sharp protrusion. When the joint wrench is matched with the anti-disassembly raised block 30, the transitional surface 33 can reduce wear and squeeze of the end portion of the anti-disassembly raised block 30 away from the end of the anti-disassembly joint 100 caused by the joint wrench.

In some embodiments, the transitional surface 33 is perpendicular to the axis of the first through hole 10. In this way, the transitional surface 33 is easy to be processed. It can be understood that, in other embodiments, the transitional surface 33 can also be processed into a curved surface, such as a concave curved surface.

In some embodiments, the stop surface 31 of the anti-disassembly raised blocks 30 is adjacent to the sliding surface 32 of another anti-disassembly raised block 30 adjacent thereof. The sliding surface 32 of o the anti-disassembly raised blocks 30 is adjacent to the stop surface 31 of another raised block 30 adjacent thereof.

In this way, the direction of the abutting torques caused by abutting component forces of the joint wrench applied on each of the stop surfaces 31 are consistent. When the loosening torque is applied on the pipe connection nut by the nut wrench, each of the sliding surfaces 32 can slide relative to the joint wrench. Therefore, the joint wrench can be smoothly pushed away from the anti-disassembly joint 100.

The anti-disassembly joint 100 provided by the present invention can be fixedly connected to the pipe connection nut and matched with thereof, and is configured to connect and communicate the evaporator with the connecting pipe of an indoor unit of a split-type air conditioner. In the process of connecting the anti-disassembly joint 100 to the pipe connection nut with the nut wrench and the joint wrench, the joint wrench can only apply the abutting torque on the anti-disassembly joint 100 along a tightening direction via the stop surface, so that the anti-disassembly joint 100 can be fixed to the pipe connection nut; and, the joint wrench cannot apply the abutting torque on the anti-disassembly joint 100 along a loosening direction to loosen and separate the anti-disassembly joint 100 from the pipe connection nut, so that the anti-disassembly joint 100 and the pipe connection nut cannot be disassembled.

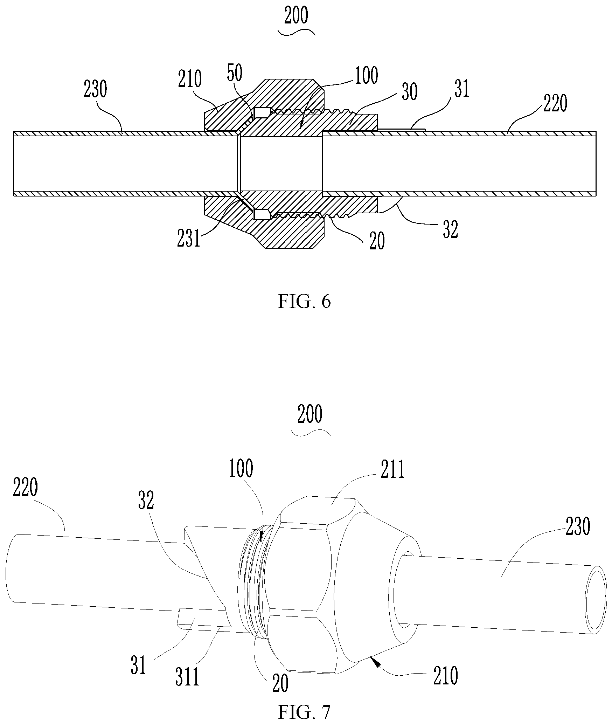

The present invention further provides an anti-disassembly joint assembly 200. Referring to FIG. 5 to FIG. 7, FIG. 5 is a structural schematic view of an anti-disassembly joint assembly 200 in an embodiment of the present invention; FIG. 6 is a half-sectional view of the anti-disassembly joint assembly of FIG. 5; and FIG. 7 is a schematic view of the anti-disassembly joint assembly of FIG. 5 from a second view angle.

The anti-disassembly joint assembly 200 includes a pipe connection nut 210, a first pipe body 220, a second pipe body 230 and the anti-disassembly joint 100 mentioned above. The anti-disassembly joint 100 is substantially in tube-shaped, and the first pipe body 220 and the second pipe body 230 are in cylindrical tube-shaped. The first pipe body 220 is capable of extending into the first through hole 10, the pipe connection nut 210 is provided with an internal thread, and the internal thread is capable of being matched with the thread portion 20 of the anti-disassembly joint 100. The pipe connection nut 210 is sleeved on the second pipe body 230, the second pipe body 230 is fixed between the anti-disassembly joint 100 and the pipe connection nut 210, and the second pipe body 230 abuts against the anti-disassembly joint 100 and the pipe connection nut 210.

The anti-disassembly joint assembly 200 provided by the present invention has the anti-disassembly function, and the anti-disassembly joint 100 can be non-removably fixed to the pipe connection nut 210. The operator can only tighten the pipe connection nut 210 and the anti-disassembly joint 100 with the nut wrench and the joint wrench, but cannot loosen the two. The first pipe body 220 can be connected to and communicated with the second pipe body 230 via the anti-disassembly joint 100 of the anti-disassembly joint assembly 200, so that a communication between an inner cavity of the first pipe body 220, the first through hole 10 and an inner cavity of the second pipe body 230 can be realized. The second pipe body 230 is sleeved on the anti-disassembly joint 100, and the pipe connection nut 210 is sleeved on the second pipe body 230, thus limiting axial and radial movements of the second pipe body 230 relative to the anti-disassembly joint 100.

In some embodiments, when the anti-disassembly joint 100 is fixed to the pipe connection nut 210, at least a part of the thread portion 20 is disposed outside the pipe connection nut 210.

In this way, when the pipe connection nut 210 is fixed on the anti-disassembly joint 100, the part of the thread portion 20 disposed outside the pipe connection nut 210 can provide an area for the external tool to clamp. Therefore, the part of the thread portion 20 disposed outside the pipe connection nut 210 can be clamped by the professional technicians with the external tool, so as to disassemble the anti-disassembly joint 100 and the pipe connection nut 210 by force.

In some embodiments, an inner wall of the first through hole 10 is provided with an internal thread, and the internal thread is configured for connecting to the first pipe body 220.

In this way, the first pipe body 220 can be fixedly connected to the anti-disassembly joint 100 via the internal thread in the first through hole 10.

It can be understood that the first pipe body 220 can also be connected to the anti-disassembly joint 100 by welding or gluing, and not limited to the threadedly connecting in the present embodiment, as long as the first pipe body 220 can be relatively fixed to the anti-disassembly joint 100.

In some embodiments, an outer surface of the pipe connection nut 210 is provided with a screwing portion 211, and a cross-section of the screwing portion 211 is in polygon-shaped and configured to be matched with the external tool.

In this way, the external tool can be matched with the screwing portion 211 of the pipe connection nut 210, and the joint wrench can be matched with the anti-disassembly raised block 30 of the anti-disassembly joint 100 at the same time by the operator, so as to apply the tightening torque to the pipe connection nut 210. At the same time, the joint wrench can abut against the stop surface 31, so that the pipe connection nut 210 can be fixed to the anti-disassembly joint 100 via the thread portion 20.

In some embodiments, a cross-sectional shape of the screwing portion 211 can be in hexagon-shaped, and the screwing portion 211 can be matched with a hexagonal nut wrench.

In this way, the hexagonal nut wrench can be configured to be directly matched with the screwing portion 211 of the pipe connection nut 210 and tighten the pipe connection nut 210 by the operator. The hexagonal nut wrench is a common tool and easy to obtain, so that the pipe connection nut 210 can be more easily tightened with the anti-disassembly joint 100.

It can be understood that the cross-sectional shape of the screwing portion 211 can also be in other polygon-shaped, such as a square, a pentagon, etc. As long as the external tool can be matched with the screwing portion 211 and apply the tightening torque to the screwing portion 211, so as to ensure the pipe connection nut 210 can be fixedly connected to the anti-disassembly joint 100, and the cross-sectional shape of the screwing portion 211 is not limited to the present embodiment.

In some embodiments, the end portion of the anti-disassembly joint 100 away from the anti-disassembly raised block 30 is further provided with an abutting surface 50, an end portion of the second pipe body 230 close to the anti-disassembly joint 100 is provided with an expanding portion 231, and the abutting surface 50 abuts against the expanding portion 231.

In this way, the second pipe body 230 can abut against the abutting surface 50 via the expanding portion 231, and the expanding portion 231 can be beneficial for the second pipe body 230 to be smoothly sleeved on the anti-disassembly joint 100, and increase the contact area between the second pipe body 230 and the abutting surface 50. The abutting surface 50 can be beneficial for axis and radial positioning of the second pipe body 230 relative to the anti-disassembly joint 100, and limit a depth of the second pipe body 230 sleeved on the anti-disassembly joint 100.

Specifically, an inner diameter of the expanding portion 231 increases along a direction close to the anti-disassembly joint 100. The abutting surface 50 can be a circular table surface, and matched with the inner wall of the expanding portion 231. The pipe connection nut 210 can be sleeved on an end of the second pipe body 230 close to the anti-disassembly joint 100. The expanding portion 231 can accommodate and be sleeved on an end of the anti-disassembly joint 100 relatively away from the anti-disassembly raised block 30, and be fixed and pressed between an inner surface of the pipe connection nut 210 and the abutting surface 50.

## Claims

1. An anti-disassembly joint (100), wherein a first through hole (10) is disposed inside the anti-disassembly joint (100), a thread portion (20) having an external thread is provided on an outer surface of the anti-disassembly joint (100), the anti-disassembly joint (100) is connectable to a pipe connection nut (210) via the thread portion (20), and an end portion of the anti-disassembly joint (100) extending out forms an anti-disassembly raised block (30), the anti-disassembly raised block (30) is provided with a stop surface (31) and a sliding surface (32), the stop surface (31) and the sliding surface (32) are disposed at two sides of the anti-disassembly raised block (30) away from each other, respectively, and the stop surface (31) is configured to be matched with an external tool to implement an installation of the anti-disassembly joint (100), wherein:
a full thread diameter of the thread portion (20) is the maximum diameter of the anti-disassembly joint (100);
the anti-disassembly joint (100) further comprises a free spinning surface (40), the free spinning surface (40) is connected to adjacent two anti-disassembly raised blocks (30), and the free spinning surface (40) is perpendicular to an axis of the first through hole (10),
the sliding surface (32) is an inclined surface, and the sliding surface (32) is smoothly connected to the free spinning surface (40).

2. The anti-disassembly joint (100) of claim 1, wherein an outer surface of the anti-disassembly raised block (30) and the stop surface (31) define a bearing edge (311), and the bearing edge (311) is capable of allowing the external tool to clamp and apply a twisting force thereon.

3. The anti-disassembly joint (100) of claim 2, wherein the bearing edge (311) is parallel to an axis of the anti-disassembly joint (100).

4. The anti-disassembly joint (100) of claim 1, wherein the stop surface (31) is a plane surface, and perpendicular to a radial cross section of the first through hole (10).

5. The anti-disassembly joint (100) of claim 1, wherein the number of the anti-disassembly raised blocks (30) is at least two, and the at least two anti-disassembly raised blocks (30) are evenly disposed along a circumference of the anti-disassembly joint (100).

6. The anti-disassembly joint (100) of claim 1, wherein the anti-disassembly raised block (30) further comprises a transitional surface (33), the transitional surface (33) is disposed at an end portion of the anti-disassembly raised block (30), and the transitional surface (33) is disposed between the stop surface (31) and the sliding surface (32) of the anti-disassembly raised block (30).

7. The anti-disassembly joint (100) of claim 6, wherein the transitional surface (33) is perpendicular to the axis of the first through hole (10).

8. An anti-disassembly joint assembly (200), comprising a pipe connection nut (210), a first pipe body (220), a second pipe body (230), and the anti-disassembly joint (100) of any one of claims 1 to 7, wherein the first pipe body (220) is capable of extending into the first through hole (10), the pipe connection nut (210) is provided with an internal thread, the internal thread is capable of being matched with the thread portion (20) of the anti-disassembly joint (100), the pipe connection nut (210) is sleeved on the second pipe body (230), the second pipe body (230) is fixed between the anti-disassembly joint (100) and the pipe connection nut (210), and the second pipe body (230) abuts against the anti-disassembly joint (100) and the pipe connection nut (210).

9. The anti-disassembly joint assembly (200) of claim 8, wherein when the anti-disassembly joint (100) is fixed to the pipe connection nut (210), at least a part of the thread portion (20) is disposed outside the pipe connection nut (210).

10. The anti-disassembly joint assembly (200) of claim 8, wherein an outer surface of the pipe connection nut (210) is provided with a screwing portion (211), and a cross-section of the screwing portion (211) is in polygon-shaped and configured to be matched with the external tool.

11. The anti-disassembly joint assembly (200) of claim 8, wherein the end portion of the anti-disassembly joint (100) away from the anti-disassembly raised block (30) is further provided with an abutting surface (50), an end portion of the second pipe body (230) close to the anti-disassembly joint (100) is provided with an expanding portion (231), and the abutting surface (50) abuts against the expanding portion (231).

## Patentansprüche

1. Eine Anti-Demontage-Verbindung (100), wobei innerhalb der Anti-Demontage-Verbindung (100) ein erstes Durchgangsloch (10) angeordnet ist, ein Gewindeabschnitt (20) mit einem Außengewinde an einer Außenfläche der Anti-Demontage-Verbindung (100) vorgesehen ist, die Anti-Demontage-Verbindung (100) über den Gewindeabschnitt (20) mit einer Rohranschlussmutter (210) verbindbar ist und ein nach außen ragender Endabschnitt der Anti-Demontage-Verbindung (100) einen erhöhten Anti-Demontage-Block (30) bildet, der erhöhte Anti-Demontage-Block (30) mit einer Anschlagfläche (31) und einer Gleitfläche (32) versehen ist, die Anschlagfläche (31) und die Gleitfläche (32) jeweils an zwei voneinander entfernten Seiten des erhöhten Anti-Demontage-Blocks (30) angeordnet sind und die Anschlagfläche (31) so konfiguriert ist, dass sie mit einem externen Werkzeug zusammenpasst, um eine Installation der Anti-Demontage-Verbindung (100) durchzuführen, wobei:
ein voller Gewindedurchmesser des Gewindeabschnitts (20) der maximale Durchmesser der Anti-Demontage-Verbindung (100) ist;
die Anti-Demontage-Verbindungsverbindung (100) ferner eine sich frei drehende Oberfläche (40) aufweist, wobei die sich frei drehende Oberfläche (40) mit zwei benachbarten erhöhten Anti-Demontage-Blöcken (30) verbunden ist und die sich frei drehende Oberfläche (40) senkrecht zu einer Achse des ersten Durchgangslochs (10) verläuft,
die Gleitfläche (32) eine geneigte Fläche ist und die Gleitfläche (32) reibungslos mit der sich frei drehenden Fläche (40) verbunden ist.

2. Die Anti-Demontage-Verbindung (100) nach Anspruch 1, wobei eine Außenfläche des erhöhten Anti-Demontage-Blocks (30) und die Anschlagfläche (31) eine Lagerkante (311) definieren und die Lagerkante (311) es dem externen Werkzeug ermöglichen kann, daran festzuklemmen und eine Drehkraft darauf auszuüben.

3. Die Anti-Demontage-Verbindung (100) nach Anspruch 2, wobei die Lagerkante (311) parallel zu einer Achse der Anti-Demontage-Verbindung (100) verläuft.

4. Die Anti-Demontage-Verbindung (100) nach Anspruch 1, wobei die Anschlagfläche (31) eine ebene Fläche ist und senkrecht zu einem radialen Querschnitt des ersten Durchgangslochs (10) steht.

5. Die Anti-Demontage-Verbindung (100) nach Anspruch 1, wobei die Anzahl der erhöhten Anti-Demontage-Blöcke (30) mindestens zwei beträgt und die mindestens zwei erhöhten Anti-Demontage-Blöcke (30) gleichmäßig entlang eines Umfangs der Anti-Demontage-Verbindung (100) angeordnet sind.

6. Die Anti-Demontage-Verbindungsverbindung (100) nach Anspruch 1, wobei der erhöhte Anti-Demontage-Block (30) außerdem eine Übergangsfläche (33) umfasst, die Übergangsfläche (33) an einem Endabschnitt des erhöhten Anti-Demontage-Blocks (30) angeordnet ist und die Übergangsfläche (33) zwischen der Anschlagfläche (31) und der Gleitfläche (32) des erhöhten Anti-Demontage-Blocks (30) angeordnet ist.

7. Die Anti-Demontage-Verbindung (100) nach Anspruch 6, wobei die Übergangsfläche (33) senkrecht zur Achse des ersten Durchgangslochs (10) verläuft.

8. Eine Anti-Demontage-Verbindungsanordnung (200), die eine Rohrverbindungsmutter (210), einen ersten Rohrkörper (220), einen zweiten Rohrkörper (230) und die Anti-Demontage-Verbindung (100) nach einem der Ansprüche 1 bis 7 umfasst, wobei der erste Rohrkörper (220) in die erste Durchgangsbohrung (10) hineinragen kann, die Rohrverbindungsmutter (210) mit einem Innengewinde versehen ist, das Innengewinde mit dem Gewindeabschnitt (20) der Anti-Demontage-Verbindung (100) zusammenpassen kann, die Rohrverbindungsmutter (210) auf den zweiten Rohrkörper (230) aufgesteckt ist, der zweite Rohrkörper (230) zwischen der Anti-Demontage-Verbindung (100) und der Rohrverbindungsmutter (210) befestigt ist und der zweite Rohrkörper (230) an der Anti-Demontage-Verbindung (100) und der Rohranschlussmutter (210) anliegt.

9. Die Anti-Demontage-Verbindungsanordnung (200) nach Anspruch 8, wobei, wenn die Anti-Demontage-Verbindung (100) an der Rohranschlussmutter (210) befestigt ist, zumindest ein Teil des Gewindeabschnitts (20) außerhalb der Rohranschlussmutter (210) angeordnet ist.

10. Die Anti-Demontage-Verbindungsanordnung (200) nach Anspruch 8, wobei eine Außenfläche der Rohrverbindungsmutter (210) mit einem Schraubabschnitt (211) versehen ist und ein Kreuzschnitt des Schraubabschnitts (211) polygonförmig und so konfiguriert ist, dass er zum externen Werkzeug passt.

11. Die Anti-Demontage-Verbindungsanordnung (200) nach Anspruch 8, wobei der Endabschnitt der Anti-Demontage-Verbindung (100) entfernt von dem erhöhten Anti-Demontage-Block (30) und außerdem mit einer Stoßfläche (50) versehen ist, ein Endabschnitt des zweiten Rohrkörpers (230) in der Nähe der Anti-Demontage-Verbindung (100) mit einem Erweiterungsabschnitt (231) versehen ist und die Stoßfläche (50) an den Erweiterungsabschnitt (231) stößt.

## Revendications

1. Un joint anti-démontage (100), dans lequel un premier trou traversant (10) est agencé à l'intérieur du joint anti-démontage (100), une partie filetée (20) munie d'un filetage externe est agencée sur une surface externe du joint anti-démontage (100), le joint anti-démontage (100) peut être raccordé à un écrou de raccordement de tuyau (210) via la partie filetée (20), et une terminaison du joint anti-démontage (100) se prolongeant à l'extérieur forme un plot anti-démontage (30), le plot anti-démontage (30) est muni d'une surface d'arrêt (31) et d'une surface coulissante (32), la surface d'arrêt (31) et la surface coulissante (32) sont agencées sur deux côtés du plot anti-démontage (30) mutuellement distantes, respectivement, et la surface d'arrêt (31) est configurée pour correspondre à un outil externe afin de réaliser l'installation du joint anti-démontage (100), dans lequel :
le diamètre de filetage total de la partie filetée (20) est le diamètre maximal du joint anti-démontage (100) ;
le joint anti-démontage (100) comprend en outre une surface de rotation libre (40), la surface de rotation libre (40) est raccordée aux deux plot anti-démontage (30) adjacents, et la surface de rotation libre (40) est perpendiculaire à un axe du premier trou traversant (10),
la surface coulissante (32) est une surface inclinée, et la surface coulissante (32) est uniformément raccordée à la surface de rotation libre (40).

2. Un j oint anti-démontage (100) selon la revendication 1, dans lequel une surface externe du plot anti-démontage (30) et la surface d'arrêt (31) définissent un chanfrein (311), et le chanfrein (311) peut permettre à l'outil externe de le serrer et d'y appliquer une force de torsion.

3. Un joint anti-démontage (100) selon la revendication 2, dans lequel le chanfrein (311) est parallèle à l'axe du joint anti-démontage (100).

4. Un joint anti-démontage (100) selon la revendication 1, dans lequel la surface d'arrêt (31) est une surface plane, et perpendiculaire à la section transversale radiale du premier trou traversant (10).

5. Un joint anti-démontage (100) selon la revendication 1, dans lequel le nombre de plots anti-démontage (30) est d'au moins deux, et les au moins deux plots anti-démontage (30) sont uniformément agencés sur la circonférence du joint anti-démontage (100).

6. Un joint anti-démontage (100) selon la revendication 1, dans lequel le plot anti-démontage (30) comprend en outre une surface de transition (33), la surface de transition (33) est agencée à une partie terminale du plot anti-démontage (30), et la surface de transition (33) est agencée entre la surface d'arrêt (31) et la surface coulissante (32) du plot anti-démontage (30).

7. Un joint anti-démontage (100) selon la revendication 6, dans lequel la surface de transition (33) est perpendiculaire à l'axe du premier trou traversant (10).

8. Un ensemble de joint anti-démontage (200), comprenant un écrou de raccordement de tuyau (210), un premier corps de tuyau (220), un deuxième corps de tuyau (230), et le joint anti-démontage (100) de l'une quelconque des revendications 1 à 7, dans lequel le premier corps de tuyau (220) peut se prolonger dans le premier trou traversant (10), l'écrou de raccordement de tuyau (210) est muni d'un filetage interne, le filetage interne peut correspondre avec la partie filetée (20) du joint anti-démontage (100), l'écrou de raccordement de tuyau (210) est emmanché sur le deuxième corps de tuyau (230), le deuxième corps de tuyau (230) est fixé entre le joint anti-démontage (100) et l'écrou de raccordement de tuyau (210), et le deuxième corps de tuyau (230) vient en butée contre le joint anti-démontage (100) et l'écrou de raccordement de tuyau (210).

9. Un ensemble de joint anti-démontage (200) selon la revendication 8, dans lequel le joint anti-démontage (100) est fixé à l'écrou de raccordement de tuyau (210), au moins une portion de la partie filetée (20) est agencée à l'extérieur de l'écrou de raccordement de tuyau (210).

10. Un ensemble de joint anti-démontage (200) selon la revendication 8, dans lequel une surface externe de l'écrou de raccordement de tuyau (210) est munie d'une partie de vissage (211), et une section transversale de la partie de vissage (211) est en forme de polygone et est configurée pour correspondre à l'outil externe.

11. Un ensemble de joint anti-démontage (200) selon la revendication 8, dans lequel la partie terminale du joint anti-démontage (100) distale du plot anti-démontage (30) est en outre munie d'une surface de butée (50), une partie terminale du deuxième corps de tuyau (230) proximale du joint anti-démontage (100) est munie d'une partie de prolongement (231), et la surface de butée (50) vient en butée contre la partie de prolongement (231).
